# EUROPÄISCHE PATENTANMELDUNG

(11) **EP 4 357 117 A1**
(43) Veröffentlichungstag der Anmeldung: **24.04.2024**
(21) Anmeldenummer: 23201944.8
(22) Anmeldetag: 05.10.2023
(51) Int. Cl.: B29D 30/00, B29B 17/02

(54) **VERFAHREN ZUM AUTOMATISIERTEN TRENNEN VON SEPARATOREN UND APEXKERNEN FÜR LUFTREIFEN VONEINANDER**

(30) Priorität: 20.10.2022 DE 102022211141
(71) Anmelder: Continental Reifen Deutschland GmbH, 30175 Hannover (DE)
(72) Erfinder: Koch, Tim, 30165 Hannover (DE)
(74) Vertreter: Continental Corporation

(57) **Zusammenfassung**

Die Erfindung betrifft ein Verfahren zum Trennen von Separatoren (3) und Apexkernen (2) für Luftreifen voneinander mit den folgenden Schritten:
a) vertikal gestapelte Lagerung von einem Apexkern (2) auf einem Separator (3), wobei der Separator eine zentrisch angeordnete Aussparung aufweist,
b) Verfahren von zumindest zwei Greifbacken (10) eines Greifsystems (7) in die Aussparung des Separators (3), wobei die Greifbacken (10) entgegen einer Gegenkraft beweglich zueinander verfahrbare Greiffinger (11) aufweisen,
c) zum Separator radiales Auseinanderfahren der Greifbacken, wobei Greiffinger (11) gegen den Separator gefahren werden und die Greiffinger (11) durch weiteres Verfahren der Greifbacken (10) einen kraftschlüssigen Kontakt mit dem Separatorerzeugen, wobei weitere Greiffinger (11) derselben Greifbacken (10) zum in Kontakt treten mit dem Apexkern (2) in Vertiefungen (15) des Separators verfahren werden,
d) In Kontakt bringen des Separators (3) mit einem Abstreifmittel (9),
e) Trennen von Apexkern und Separator voneinander durch eine relative axiale Verfahrbewegung zwischen dem Greifsystem und dem Abstreifmittel.

## Beschreibung

Die Erfindung betrifft ein Verfahren sowie eine Trennvorrichtung zum automatisierten Trennen von Separatoren und Apexkernen für Luftreifen voneinander.

Bei der Konfektion von Apexkernen für Luftreifen wird ein Profil aus Rohkautschuk auf einen kreisringförmigen Kern aufgebracht. Um die Apexkerne zu lagern und an eine Reifenbaumaschine zu transportieren, werden die Apexkerne auf Separatoren gelagert. Durch die Separatoren zwischen den einzelnen Apexkernen wird verhindert, dass die Apexkerne schwer löslich aneinanderkleben. Abhängig insbesondere von der Geometrie der Apexkerne und den Eigenschaften des Rohkautschuks haften die Apexkerne unterschiedlich stark an den Separatoren. Insbesondere gebogene Apexkerne haften besonders intensiv an den Separatoren.

Das Trennen von Apexkernen von Separatoren wird manuell durchgeführt, insbesondere, wenn die Apexkerne besonders stark an den Separatoren haften. Ein Nachteil dabei ist, dass ein personeller Einsatz erforderlich ist.

Aus der DE 10 2012 103 068 A1 ist ein Verfahren zum automatisierten Trennen von horizontal gelagerten Kernverbänden für Fahrzeugreifen und Separatoren bekannt. Es Verfahren verschiedene Griffmittel zu dem ausgerichteten Separator und entnehmen in einem ersten Schritt einen Kernverband und führen ihn einer Reifenbaumaschine zu. In einem zweiten Schritt wird ein Separator der Lagerung entnommen und einer Separatorlagerung zugeführt.

Der Erfindung lag die Aufgabe zugrunde ein Verfahren sowie eine möglichst einfache Trennvorrichtung bereitzustellen mit denen die Apexkerne auch bei stärkerem Anhaften an den Separatoren prozesssicher sowie mit wenigen Verfahrensschritten von den Separatoren getrennt werden können.

Diese Aufgabe wird gelöst mit einem Verfahren gemäß den Merkmalen des Patentanspruches 1 sowie einer Trennvorrichtung und einem Luftreifen gemäß den nebengeordneten Ansprüchen. Die Unteransprüche betreffen besonders zweckmäßige Weiterbildungen der Erfindung.

Erfindungsgemäß ist also ein Verfahren zum automatisierten Trennen von Separatoren und Apexkernen für Luftreifen voneinander vorgesehen, mit den folgenden Schritten:
a) vertikal gestapelte Lagerung von zumindest einem Apexkern auf zumindest einem Separator, wobei der Separator eine zentrisch zum Separator angeordnete Aussparung aufweist, wobei der Separator auf einem horizontalen Element, insbesondere einem horizontal angeordneten weiteren Separator oder einem weiteren horizontal angeordneten Apexkern lagert,
b) Verfahren von zumindest zwei Greifbacken eines Greifsystems in die zentrisch angeordnete Aussparung des Separators, wobei die Greifbacken entgegen einer Gegenkraft beweglich zueinander verfahrbare Greiffinger aufweisen,
c) zum Separator radiales Auseinanderfahren der Greifbacken, wobei Greiffinger gegen den Separator gefahren werden und die Greiffinger durch weiteres Verfahren der Greifbacken einen kraftschlüssigen Kontakt mit dem Separator erzeugen, wobei weitere Greiffinger derselben Greifbacken zum in Kontakt treten mit dem Apexkern in Vertiefungen des Separators verfahren werden,
d) In Kontakt bringen des Separators mit einem Abstreifmittel,
e) Trennen von Apexkern und Separator voneinander durch eine relative axiale Verfahrbewegung zwischen dem Greifsystem und dem Abstreifmittel unter Überwindung oder Lösung des kraftschlüssigen Kontakts der Greiffinger mit dem Separator.

Die vertikale Lagerung von Apexkernen ermöglicht einen Transport und eine Lagerung der Apexkerne auf einer besonders kleinen Fläche. Die zentrisch angeordnete Aussparung des Separators ermöglicht es den Greifbacken in die Aussparungen des Separators zu verfahren, ohne dass eine exakte Ausrichtung des Separators bekannt ist. Insbesondere kann eine rotatorische Ausrichtung entfallen.

Unter radialem Auseinanderfahren der Greifbacken wird ein Verfahren der Greifbacken verstanden, so dass die Greifbacken sich nach dem Verfahren auf einem Kreis mit einem größeren Radius befinden, wobei der Kreis die Greifbacken in Ihrer jeweiligen Position gerade umfasst. Somit wird beispielweise auch das geometrisch parallele Verfahren von zwei nebeneinander angeordneten Greifbacken oder ein Verfahren mittels Schwenkantrieb als ein radiales Verfahren verstanden.

Es wurde erkannt, dass durch das relative axiale Verfahren des Greifsystems zum Abstreifmittel in Zusammenwirken mit den entgegen einer Gegenkraft beweglich zueinander verfahrbaren Greiffingern ein besonders einfaches sowie zuverlässiges Trennverfahren ermöglicht wird. Zum voneinander unabhängigen Fixieren der Apexkerne sowie der Separatoren am Greifsystem ist lediglich das Verfahren eines Satzes gleichartiger Greifbacken notwendig, da die Greifbacken aufgrund der nachgiebigen Lagerung der Greiffinger die Separatoren kraftschlüssig fixieren und durch die gleiche Bewegung, gegebenenfalls im Zusammenwirken mit dem relativen axialen Verfahren, die Apexkerne im Bereich der Aussparungen der Separatoren fixieren.

Aufgrund der Mehrzahl der Greiffinger je Greifbacke wird, ohne dass ein rotatorisches Ausrichten der Greifbacken zum Separator notwendig ist, sowohl der Separator als auch der Apexkern fixiert.

Entsprechend der Geometrie der Greiferfinger und den Eigenschaften des Apexkerns können beim Abstreifen des Separators die Greifbacken, zum zumindest teilweisen Lösen des kraftschlüssigen Kontakts, um eine kurze Strecke radial nach innen zurückgefahren werden, so dass das Trennen des Separators vom Apexkern mit einer besonders geringen Kraft durchgeführt werden kann.

Durch das Erzeugen einer kraftschlüssigen Verbindung wird erreicht, dass kein weiterer Aktor oder Mechanismus, wie beispielweise ein Vakuumgreifer oder ein magnetischer Effekt genutzt werden muss.

Eine bevorzugte Ausführungsform sieht vor, dass die weiteren Greiffinger in Schritt c) durch das radiale Verfahren der Greifbacken einen kraftschlüssigen Kontakt mit dem Apexkern erzeugen. Das Erzeugen eines kraftschlüssigen Kontaktes zwischen Greiferfinger und Apexkern macht das Erzeugen einer formschlüssigen Verbindung entbehrlich, wodurch die geometrischen Anforderungen an die Greifbacken sowie die Separatoren beim Aufnehmen des Apexkerns sowie die Anforderungen an die Geometrie der Reifenbaumaschine verringert werden.

Eine weitere bevorzugte Ausführungsform sieht vor, dass die Greiffinger Vorsprünge aufweisen, wobei die Vorsprünge der weiteren Greiffinger, die in Schritt c) in die Vertiefungen des Separators verfahren, unter den Apexkern verfahren. Eine formschlüssige Verbindung zwischen den Vorsprüngen der Greiffinger und dem Apexkern ermöglicht ein besonders prozesssicheres fixieren der Apexkerne, was insbesondere bei stark am Separator anhaftenden Apexkernen vorteilhaft ist.

Eine weitere bevorzugte Ausführungsform sieht vor, dass zwischen Schritt c) und d) der Separator mit dem Apexkern von der Lagereinheit zu einer Trennposition verfahren wird, wobei der Separator bevorzugt an der Trennposition verbleibt. Das Verfahren des Separators von der Lagereinheit zu der Trennposition erhöht die Effizienz des Verfahrens, da hierdurch der Separator der folgend nach dem Trennvorgang keinen Apexkern lagert bereits von der Lagereinheit für Separatoren mit Apexkernen entfernt worden ist. Bevorzugt entspricht die Lagerposition für Separatoren ohne Apexkern der Trennposition, wodurch wiederum die Effizienz des Verfahrens erhöht wird.

Eine weitere bevorzugte Ausführungsform sieht vor, dass folgend auf Schritt e) die Greifbacken zum Freigeben des Apexkerns in radialer Richtung zusammengefahren werden, insbesondere zum Übergeben des Apexkerns an eine Reifenbaumaschine. Durch das radiale Zusammenfahren der Greifbacken wird der Apexkern mit einem geringen Kraftaufwand und somit besonders schonend von den Greiffingern entnehmbar. Das Trennverfahren wird besonders effizient, wenn der Apexkern unmittelbar an eine Reifenbaumaschine übergeben wird.

Eine weitere bevorzugte Ausführungsform sieht vor, dass das Verfahren mit genau einem Greifsystem durchgeführt wird, wobei die zumindest zwei Greifbacken des Greifsystems gleichartig sind. Ein Durchführen des Verfahrens mit genau einem Greifsystem und nur einer Art von Greifbacken ermöglicht das Verfahren mit einer besonders geringen Anzahl von Schritten und einer besonders einfachen Ansteuerung durchzuführen. Weiterhin wird der Aufbau einer Trennvorrichtung besonders einfach.

Eine weitere bevorzugte Ausführungsform sieht vor, dass die Gegenkraft, gegen die die Greiferfinger der Greifbacken zueinander verfahrbar sind, durch ein federndes Element, insbesondere eine Feder oder einen Pneumatikzylinder erzeugt wird. Das Erzeugen der Gegenkraft lässt sich durch ein federndes Element, insbesondere durch eine Feder oder einen Pneumatikzylinder in besonders einfacher und zuverlässiger Weise realisieren.

Erfindungsgemäß ist eine Trennvorrichtung zum Trennen von Separatoren und Apexkernen für Luftreifen voneinander, insbesondere zum Durchführen eines erfindungsgemäßen Verfahrens vorgesehen, wobei die Trennvorrichtung aufweist:
- eine Lagereinheit zum vertikalen übereinander Lagern von Apexkernen auf Separatoren,
- eine Lagerposition zum Lagern von Separatoren,
- eine Verfahreinheit zum Verfahren eines Greifsystems,
- das Greifsystem mit zumindest zwei zueinander beabstandeten zueinander verfahrbaren Greifbacken mit jeweils zumindest zwei Greiffingern, die jeweils entgegen einer Gegenkraft beweglich zu einem weiteren Greiffinger verfahrbar gelagert sind,
- Abstreifmittel zum Abstreifen der Separatoren von den Greiffingern.

Es wurde erkannt, dass durch die relative Verfahrbarkeit des Greifsystems zum Abstreifmittel in Zusammenwirken mit den entgegen einer Gegenkraft beweglich zueinander verfahrbaren Greiffingern eine besonders einfache sowie zuverlässige Trennvorrichtung realisierbar wird. Für das unabhängige Fixieren der Apexkerne sowie der Separatoren ist lediglich ein Satz gleichartiger Greifbacken notwendig, da aufgrund der nachgiebigen Lagerung der Greiffinger an den Greifbacken die Separatoren kraftschlüssig fixierbar sind und weiterhin die Apexkerne im Bereich der Aussparungen der Separatoren fixierbar sind.

Aufgrund der Mehrzahl der Greiffinger je Greifbacke können Sensoren sowie Aktoren für eine rotatorische Ausrichtung der Greifbacken zum Separator entfallen, wobei sowohl der Apexkern als auch der Separator mit den Greiffingern greifbar ist. Auch auf ein Ausrichtungsmerkmal an den Separatoren zur relativen rotativen Ausrichtung der Separatoren zueinander kann verzichtet werden. Eine besonders einfache Trennvorrichtung, die auch bei stärkerem Anhaften von Apexkernen an Separatoren ein prozesssicheres Trennen sicherstellt, wird ermöglicht.

Eine bevorzugte Ausführungsform sieht vor, dass die Greiffinger jeweils einen Vorsprung aufweisen, wobei die Vorsprünge, bevorzugt zusammen mit den Greiffingern, mittels eines elastischen Elements, insbesondere einem Federblech und/oder einer Helixfeder und/oder einer Schenkelfeder und/oder einem Pneumatikzylinder nachgiebig, insbesondere schwenkbar oder verschieblich, gelagert sind. Die Vorsprünge der Greiffinger ermöglichen beim kraftschlüssigen Fixieren der Separatoren die Apexkerne formschlüssig zu greifen. Dies wird in einfacher und zuverlässiger Form realisierbar, indem Greiffinger mittels elastischer Elemente, insbesondere mit Federblechen und beziehungsweise oder Helixfedern und beziehungsweise oder Schenkelfedern und beziehungsweise oder Pneumatikzylindern nachgiebig gelagert werden.

Eine weitere bevorzugte Ausführungsform sieht vor, dass das Greifsystem zumindest drei zueinander verfahrbare Greifbacken aufweist, wobei der Abstand der Greifbacken auf dem Umfang eines zu greifenden Apexkerns ungleichmäßig sind, wobei der Abstand zweier Greifbacken bevorzugt, kleiner 100°, weiter bevorzugt kleiner 80° und am meisten bevorzugt kleiner 60° ist. Ein Greifsystem mit zumindest drei zueinander verfahrbaren Greifbacken ermöglicht eine besonders zuverlässige Fixierung von Apexkernen. Hierbei hat es sich als vorteilhaft herausgestellt, wenn die Greifbacken ungleichmäßig auf den Umfang des zu greifenden Apexkerns verteilt sind, da hierdurch einem schlagartigen Lösen des Apexkerns vom Separator entgegengewirkt wird. Das schlagartige Lösen kann zu höheren Kräften und dadurch zu einer erhöhten Belastung für den Apexkern führen. Dies kann insbesondere dadurch vermieden werden, dass die zueinander geringer beanstandeten Greifbacken den Apexkern zuerst vom Separator lösen, bevor die weiter beanstandeten Greifbacken den Apexkern vom Separator lösen.

Eine weitere bevorzugte Ausführungsform sieht vor, dass das Abstreifmittel an der Verfahreinheit oder an der Separatoren Lagereinheit gelagert ist. Ein Abstreifmittel an der Verfahreinheit ermöglicht es mit nur einem Abstreifmittel den Separator an unterschiedlichen Positionen vom Apexkern zu trennen. Eine Positionierung des Abstreifmittels an der Lagereinheit vereinfacht das Greifsystem und verringert die Massen, die mit der Verfahreinheit verfahren werden.

Eine weitere bevorzugte Ausführungsform sieht vor, dass die Trennvorrichtung Separatoren aufweist, wobei die Separatoren Vertiefungen aufweisen, wobei die Vertiefungen in ihrer Geometrie an die Geometrie der Greifbacken und der Greiffinger angepasst sind. An die Greiffinger und die Apexkerne angepasste Separatoren ermöglicht ein zuverlässiges Greifen der Separatoren und der Apexkerne durch die Greiffinger.

Erfindungsgemäß ist ein Luftreifen mit Apexkernen hergestellt nach einem erfindungsgemäßen Verfahren zum automatisierten Trennen von Separatoren und Apexkernen voneinander, insbesondere mit einer erfindungsgemäßen Trennvorrichtung vorgesehen. Luftreifen mit Apexkernen hergestellt nach dem erfindungsgemäßen Verfahren, insbesondere hergestellt mit der erfindungsgemäßen Trennvorrichtung sind besonders kosteneffizient herstellbar, da das Verfahren besonders zeiteffizient ist und die Trennvorrichtung kosteneffizient herstellbaren ist, wobei durch die Handhabung der Apexkerne ein besonders geringer Ausschuss erreichbar ist.

Die Erfindung lässt zahlreiche Ausführungsformen zu. Zur weiteren Verdeutlichung ihres Grundprinzips sind zwei davon in den Zeichnungen dargestellt und werden nachfolgend beschrieben. Diese zeigen in
Fig. 1 eine Trennvorrichtung zum Trennen von Apexkernen von Separatoren an einer Reifenbaumaschine;
Fig. 2 ein Greifsystem mit drei Greifbacken, die jeweils drei Greiffinger aufweisen;
Fig. 3a bis 3c eine Greifbacke mit vier Greiffingern an einem Separator.

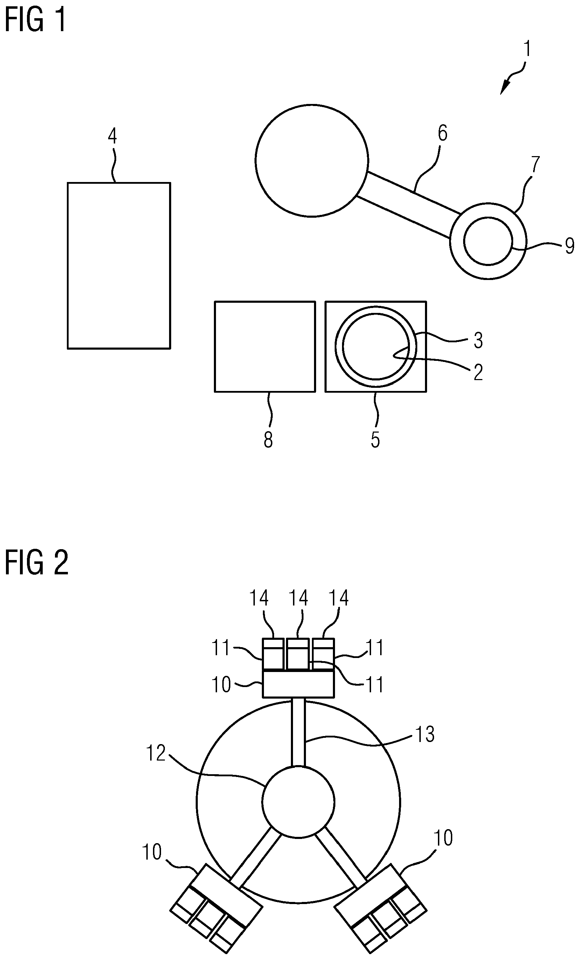

Figur 1 zeigt eine Trennvorrichtung 1 zum Trennen von Apexkernen 2 von Separatoren 3, wobei die Trennvorrichtung 1 an einer Reifenbaumaschine 4 angeordnet ist. Die Trennvorrichtung 1 weist eine Lagereinheit 5 auf, auf der vertikal übereinander Separatoren 3 gelagert sind, auf denen jeweils ein Apexkern 2 aufliegt. Mittels einer Verfahreinheit 6, die als ein Roboterarm ausgeführt ist, wird ein Greifsystem 7 an der Lagereinheit 5 positioniert. Das Greifsystem 7 entnimmt der Lagereinheit 5 einen Separator 3 mit einem auf dem Separator 3 aufliegenden Apexkern 2, der aufgrund seiner Kautschukoberfläche und seiner Geometrie an dem Separator 3 anhaftet. Das Greifsystem 7 wird mit der Verfahreinheit 6 zu einer Lagerposition 8 zum Lagern der Separatoren 3 verfahren. Der Separator 3 wird an der Lagerposition 8 mit einem Abstreifmittel 9 relativ zum Greifsystem 7 verfahren und dadurch von dem Apexkern 2 getrennt. Das Greifsystem 7 verfährt zu der Reifenbaumaschine 4 und gibt dort den Apexkern 2 frei.

In Figur 2 ist eine Ausführungsform eines Greifsystems 7 mit drei ungleichmäßig auf den Umfang verteilten Greifbacken 10, die jeweils drei Greiffinger 11 aufweisen, dargestellt. Die Greifbacken 10 werden durch einen Antrieb 12, der als ein Elektromotor ausgeführt ist, mittels einer Mechanik 13, die Zahnstangen und Zahnräder aufweist, in radialer Richtung verfahren. Zum in Kontakt treten mit dem Separator 3 und dem Apexkern 2 werden die Greiffinger 11 mit der Verfahreinheit 6 in eine zentrisch im Separator 3 angeordnete Aussparung verfahren. In der zentrisch im Separator 3 angeordneten Aussparung werden die Greifbacken in mit dem Antrieb 12 mittels der Mechanik 13 in radialer Richtung nach außen verfahren.

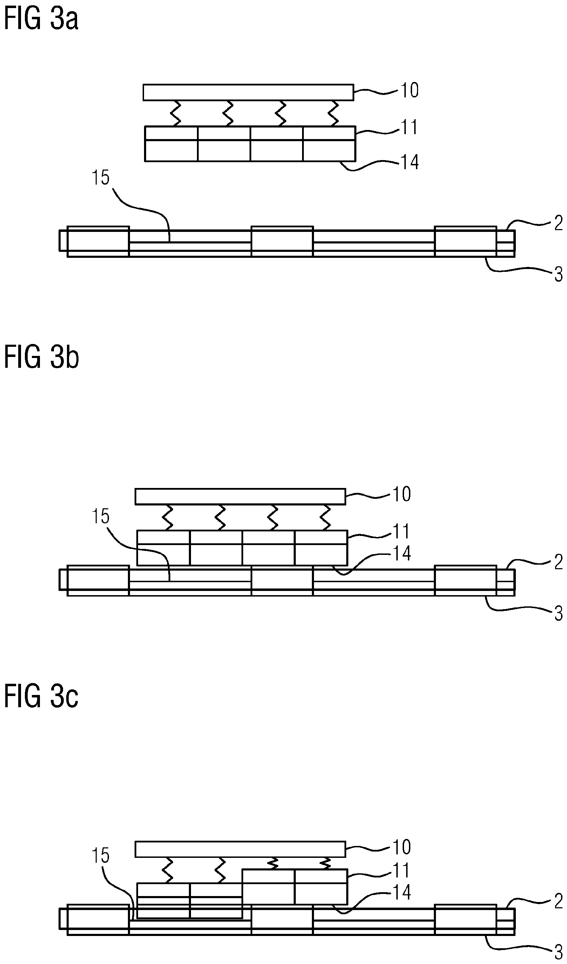

Wie auch in den Figuren 3a bis 3c ersichtlich sind die Greiffinger 11 zu den Greifbacken 10 in radialer Richtung nachgiebig gelagert. Die Greiffinger 11 weisen Vorsprünge 14 auf, die gegen den inneren Rand des Separators 3 verfahren werden. Durch ein weiteres Verfahren der Greifbacken 10 in radialer Richtung werden die Greiffinger 11 gegen eine Gegenkraft relativ zu den Greifbacken 10 Verfahren und erzeugen eine kraftschlüssige Verbindung mit dem Separator 3. Weitere Vorsprünge 14 einer jeden Greifbacke 10 Verfahren nicht gegen den Separator 3 sondern in Vertiefungen 15 des Separators 3, wobei sich oberhalb der Vertiefungen 15 beziehungsweise der Vorsprünge 14 der Apexkern 2 befindet. Die weiteren Vorsprünge 14 gehen somit eine formschlüssige Verbindung mit dem Apexkern 2 ein, wenn das Greifsystem 7 nach oben verfahren wird.

In Figur 3a ist eine Greifbacke 10 mit vier Greiffingern 11 beabstandet zu einem Separator 3 mit einem auf dem Separator 3 angeordneten Apexkern 2 dargestellt. In Figur 3b treten die Vorsprünge 14 mit dem Separator 3 in Kontakt, wobei sie durch ein weiteres Verfahren der Greifbacke 10 in Richtung Separator 3 relativ zu der Greifbacke 10 gegen eine Federkraft verfahren werden. Wie in Figur 3c ersichtlich sind die Greiffinger 11 die mit dem Separator 3 in Kontakt getreten sind relativ zu der Greifbacke 10 verfahren. Die Greiffinger 11, die in eine Vertiefung 15 ragen sind zu der Greifbacke 10 nicht verfahren.

### Bezugszeichenliste

- 1: Trennvorrichtung
- 2: Apexkern
- 3: Separator
- 4: Reifenbaumaschine
- 5: Lagereinheit

- 6: Verfahreinheit
- 7: Greifsystem
- 8: Lagerposition
- 9: Abstreifmittel
- 10: Greifbacke

- 11: Greiffinger
- 12: Antrieb
- 13: Mechanik
- 14: Vorsprung
- 15: Vertiefung

## Patentansprüche

1. Verfahren zum automatisierten Trennen von Separatoren (3) und Apexkernen (2) für Luftreifen voneinander mit den folgenden Schritten:
a) vertikal gestapelte Lagerung von zumindest einem Apexkern (2) auf zumindest einem Separator (3), wobei der Separator (3) eine zentrisch zum Separator (3) angeordnete Aussparung aufweist, wobei der Separator (3) auf einem horizontalen Element, insbesondere einem horizontal angeordneten weiteren Separator (3) oder einem weiteren horizontal angeordneten Apexkern (2) lagert,
b) Verfahren von zumindest zwei Greifbacken (10) eines Greifsystems (7) in die zentrisch angeordnete Aussparung des Separators (3), wobei die Greifbacken (10) entgegen einer Gegenkraft beweglich zueinander verfahrbare Greiffinger (11) aufweisen,
c) zum Separator (3) radiales Auseinanderfahren der Greifbacken (10), wobei Greiffinger (11) gegen den Separator (3) gefahren werden und die Greiffinger (11) durch weiteres Verfahren der Greifbacken (10) einen kraftschlüssigen Kontakt mit dem Separator (3) erzeugen, wobei weitere Greiffinger (11) derselben Greifbacken (10) zum in Kontakt treten mit dem Apexkern (2) in Vertiefungen (15) des Separators (3) verfahren werden,
d) In Kontakt bringen des Separators (3) mit einem Abstreifmittel (9),
e) Trennen von Apexkern (2) und Separator (3) voneinander durch eine relative axiale Verfahrbewegung zwischen dem Greifsystem (7) und dem Abstreifmittel (9) unter Überwindung oder Lösung des kraftschlüssigen Kontakts der Greiffinger (11) mit dem Separator (3).

2. Verfahren nach Anspruch 1, **dadurch gekennzeichnet, dass** die weiteren Greiffinger (11) in Schritt c) durch das radiale Verfahren der Greifbacken (10) einen kraftschlüssigen Kontakt mit dem Apexkern (2) erzeugen.

3. Verfahren nach den Ansprüchen 1 oder 2, **dadurch gekennzeichnet, dass** die Greiffinger (11) Vorsprünge (14) aufweisen, wobei die Vorsprünge (14) der weiteren Greiffinger (11), die in Schritt c) in die Vertiefungen (15) des Separators (3) verfahren, unter den Apexkern (2) verfahren, um den Kern formschlüssig zu greifen.

4. Verfahren nach einem der vorangehenden Ansprüche, **dadurch gekennzeichnet, dass** zwischen Schritt c) und d) der Separator (3) mit dem Apexkern (2) von der Lagereinheit (5) zu einer Trennposition verfahren wird, wobei der Separator (3) bevorzugt an der Trennposition verbleibt.

5. Verfahren nach einem der vorangehenden Ansprüche, **dadurch gekennzeichnet, dass** folgend auf Schritt e) die Greifbacken (10) zum Freigeben des Apexkerns (2) in radialer Richtung zusammengefahren werden, insbesondere zum Übergeben des Apexkerns (2) an eine Reifenbaumaschine (4).

6. Verfahren nach einem der vorangehenden Ansprüche, **dadurch gekennzeichnet, dass** das Verfahren mit genau einem Greifsystem (7) durchgeführt wird, wobei die zumindest zwei Greifbacken (10) des Greifsystems (7) gleichartig sind.

7. Verfahren nach einem der vorangehenden Ansprüche, **dadurch gekennzeichnet, dass** die Gegenkraft, gegen die die Greiferfinger (11) der Greifbacken (10) zueinander verfahrbar sind, durch ein federndes Element, insbesondere eine Feder oder einen Pneumatikzylinder erzeugt wird.

8. Trennvorrichtung (1) zum Trennen von Apexkernen (2) und Separatoren (3) voneinander, insbesondere zum Durchführen eines Verfahrens nach einem der vorhergehenden Ansprüche, wobei die Trennvorrichtung (1) aufweist:
- eine Lagereinheit (5) zum vertikalen übereinander Lagern von Apexkernen (2) auf Separatoren (3),
- eine Lagerposition (8) zum Lagern von Separatoren (3),
- eine Verfahreinheit (6) zum Verfahren eines Greifsystems (7),
- das Greifsystem (7) mit zumindest zwei zueinander beabstandeten zueinander verfahrbaren Greifbacken (10) mit jeweils zumindest zwei Greiffingern (11), die jeweils entgegen einer Gegenkraft beweglich zu einem weiteren Greiffinger (11) verfahrbar gelagert sind,
- Abstreifmittel (9) zum Abstreifen der Separatoren (3) von den Greiffingern (11).

9. Trennvorrichtung (1) nach Anspruch 8, **dadurch gekennzeichnet, dass** die Greiffinger (11) jeweils einen Vorsprung (14) aufweisen, wobei die Vorsprünge (14), bevorzugt zusammen mit den Greiffingern (11), mittels eines elastischen Elements, insbesondere einem Federblech und/oder einer Helixfeder und/oder einer Schenkelfeder und/oder einem Pneumatikzylinder nachgiebig, insbesondere schwenkbar oder verschieblich, gelagert sind.

10. Trennvorrichtung (1) nach Anspruch 8 oder 9, **dadurch gekennzeichnet, dass** das Greifsystem (7) zumindest drei zueinander verfahrbare Greifbacken (10) aufweist, wobei der Abstand der Greifbacken (10) auf dem Umfang eines zu greifenden Apexkerns (2) ungleichmäßig sind, wobei der Abstand zweier Greifbacken (10) bevorzugt, kleiner 100°, weiter bevorzugt kleiner 80° und am meisten bevorzugt kleiner 60° ist.

11. Trennvorrichtung (1) nach einem der Ansprüche 8 bis 10, **dadurch gekennzeichnet, dass** das Abstreifmittel (9) an der Verfahreinheit (6) oder an der Lagerposition (8) gelagert ist.

12. Trennvorrichtung (1) nach einem der Ansprüche 8 bis 11, **dadurch gekennzeichnet, dass** die Trennvorrichtung (1) Separatoren (3) aufweist, wobei die Separatoren (3) Vertiefungen (15) aufweisen, wobei die Vertiefungen (15) in ihrer Geometrie an die Geometrie der Greifbacken (10) und der Greiffinger (11) angepasst sind.

13. Luftreifen mit Apexkernen (2) hergestellt nach einem Verfahren zum automatisierten Trennen von Separatoren (3) und Apexkernen (2) für Luftreifen voneinander nach einem der Ansprüche 1 bis 7, insbesondere mit einer Trennvorrichtung (1) nach einem der Ansprüche 8 bis 12.
